Europäisches Patentamt

European Patent Office

Office européen des brevets

(19)

(11) EP 0 719 867 A1

(12) **EUROPÄISCHE PATENTANMELDUNG**

(43) Veröffentlichungstag:
03.07.1996 Patentblatt 1996/27

(51) Int Cl.⁶: **C21C 5/52**, F27B 3/08,
H05B 7/11, F27B 3/24

(21) Anmeldenummer: 95810779.9

(22) Anmeldetag: 11.12.1995

(84) Benannte Vertragsstaaten:
AT DE ES FR IT

(30) Priorität: 24.12.1994 DE 4446542

(71) Anmelder: **ABB Management AG**
CH-5401 Baden (CH)

(72) Erfinder: **Stenkvist, Sven-Einar**
CH-5200 Brugg (CH)

(54) **Ofengefäss für einen Gleichstrom-Lichtbogenofen**

(57)  Das Ofengefäss für einen Gleichstrom-Lichtbogenofen weist eine wärmebeständige Wandung auf, die vorzugsweise im oberhalb der Schlackenlinie (S) liegenden Bereich aus einer Mehrzahl wassergekühlter Wandsegmente (1) aus Stahl besteht. Diese Wandsegmente sind an einer Tragkonstruktion (13 - 18) befestigt sind. Mindestens eines der Wandsegmente (3) besteht aus unmagnetischem Stahl oder Kupfer und ist vorzugsweise auf der der Stromversorgungseinrichtung (7) gegenüberliegenden Seite des Ofengefässes (5) angeordnet.

Auf diese Weise lässt sich der Einfluss der unter oder neben dem Ofengefäss verlaufenden Hochstromleitungen, die eine Ablenkung des Lichtbogens hervorrufen, kompensieren.

Die Wirkung dieses nichtmagnetischen Wandsegments kann teilweise oder fast gänzlich aufgehoben werden durch eine Trimmplatte (19), die von aussen her an dem nichtmagnetischen Wandsegment (3) lösbar befestigt ist, um auf diese Weise ein Trimmen der Ablenkung des Lichtbogens hin zum Optimum zu erreichen.

FIG. 4

**Beschreibung**

**TECHNISCHES GEBIET**

Die Erfindung bezieht sich auf ein Ofengefäss für einen Gleichstrom-Lichtbogenofen mit einer wärmebeständigen Wandung und einem äusseren Gefässmantel aus Stahl, einer Bodenelektrode und einer Schmelzelektrode, die von einer seitlich ausserhalb des Gefässes befindlichen Stromversorgungseinrichtung über Hochstromleitungen gespeist sind.

Ein Ofengefäss dieser Gattung ist bekannt aus der undatierten Firmenschrift der Fa. ABB Process Automation Ltd., CH-5401 Baden/Switzerland "Arc Furnaces", insbesondere Seite 9, Bild oben links.

**TECHNOLOGISCHER HINTERGRUND UND STAND DER TECHNIK**

Metallschmelzöfen sind normalerweise als Stahlkonstruktion ausgeführt. Zum Schutz gegen die hohen Temperaturen im Gefäss sind im Bereich der Schmelze Auskleidungen aus Feuerfestmaterial vorgesehen. Oberhalb der Schmelzzone (Schlackenlinie) besteht der Gefässmantel aus waseergekühlten Wandsegmenten, auch Kühlpaneele genannt, um die beanspruchten Teile vor Hitzeinwirkungen zu schützen.

Aus der eingangs genannten Firmenschrift "Arc Furnaces" oder auch der DE-27 45 622 C2 ist ein derartiges Gefäss für einen Metallschmelzofen bekannt. Der oberhalb der der Schlackenlinie liegende Bereich der Gefässwand besteht aus Kühlpaneelen, die aus Stahlrohren aufgebaut sind. Beim Gefäss der Firmenschrift sind die Rohre voneinander distanziert, und die Distanzen zwischen den Rohren sind mittels Metallstreifen ausgefüllt. Bei dem Gefäss gemäss DE-27 45 622 C2 bestehen die Wandpaneele aus dicht an dicht angeordneten, beidseitig freiliegenden Kühlrohrschlangen. In beiden Fällen sind sie an einer als Blechmantel oder Skelett ausgebildeten Tragwand befestigt.

Bei neuen Hochleistungs-Gleichstromöfen hat sich gezeigt, dass der Lichtbogen seitlich mehr oder weniger stark abgelenkt wird. Diese Ablenkung wird vom Magnetfeld, das die Hochstromleitungen umgibt, verursacht, und hat einen starken Verschleiss von Ofenwand und Ofendeckel zur Folge. Die unsymmetrische Energieverteilung im Ofen verursacht zudem zusätzliche Enrgieverluste.

Bis jetzt sind im wesentlichen zwei Gegenmassnahmen zu Einsatz gekommen, um die seitliche Ablenkung des Lichtbogens zu beseitigen:

- Exzentrische Versetzung der Elektrode in Richtung weg von der Ablenkung (EP-0 158 937 B1);

- Verlegung der Hochstromleitungen auf einer höheren Ebene um die Ofenplattform herum und erst auf der der Stromversorgungseinrichtung entfernten Seite des Ofengefässes nach unten zu den Anschlüssen der Bodenelektrode hinunterführend (EP-0 518 070 A1).

Für beide Gegenmassnahmen konnte eine Einwirkung auf die Lichtbogenablenkung nachgewiesen werden. Die praktisch realisierbare exzentrische Versetzung hat sich dabei als nicht ausreichend erwiesen, um einen vollständigen Abbau der Ablenkung zu gewährleisten. Dagegen hat sich die gezielte Verlegung der Hochstromleitungen als wirkungsvolle Gegenmassnahme bewährt. Sie hat jedoch den Nachteil, dass die Auswirkungen dieser Massnahmen äussert schwer im voraus zu bestimmen sind, weil sämtliche am Ofen und seinem Aufstellort befindlichen magnetischen Bauteile und deren magnetische Sättigung bei einer Berechnung mit einbezogen werden müssen.

Die Praxis hat gezeigt, dass die spezielle Verlegung der Hochstromleitungen die Gefahr einer Ueberkorrektur der Ablenkung zur Folge hat: Die angestrebte Kompensation der Lichtbogenablenkung führt zu einer Ablenkung in Gegenrichtung, was nur zu einer Verlagerung der mit der Ablenkung verknüpften Probleme zu einen anderen Bereich im Inneren des Ofengefässes führt.

Zwar könnte man das Hochstromleitersystem unter Berücksichtigung dieser Erfahrungen neu rechnen, umkonstruieren oder umbauen, es bestünde jedoch keine Garantie, dass die Ablenkung nachher erfolgreich abgebaut worden wäre. Zudem ist ein Umbau des Hochstromleitersystems teuer und zeitaufwendig. Auch müsste der Ofen während einer gewissen Zeit ausser Betrieb gesetzt werden. Auch wenn auf diese Weise für eine bestimmte Ofengrösse und Elektrodenstrom eine Lösung gefunden werden könnte, wäre diese auf eine anderen Ofengrösse und/oder Ofenleistung nicht unbedingt übertragbar.

**KURZE DARSTELLUNG DER ERFINDUNG**

Der Erfindung liegt die Aufgabe zugrunde, bei einem Gefäss für einen Gleichstrom-Lichtbogenofen Massnahmen anzugeben, die ein einfaches Trimmen der Korrektur der Ablenkung ermöglichen und ohne Abschalten oder gar Umbau des Ofens zu realisieren sind und zudem für alle Ofengrössen und Ofenleistungen geeignet sind.

Diese Aufgabe wird erfindungsgemäss dadurch gelöst, dass mindestens ein Wandabschnitt des Gefässmantels aus unmagnetischem Material, vorzugsweise unmagnetischem Stahl oder Kupfer, besteht, der vorzugsweise auf der der stromversorgungseinrichtung gegenüberliegenden Seite des Ofengefässes angeordnet ist.

Die Erfindung ist vor allem bei Ofengefässen vorteilhaft zu realisieren, die im oberhalb der Schlackenlinie liegenden BEreich aus einer Mehrzahl wassergekühlter Wandsegmente aus Stahl bestehen, die an einer Tragkonstruktion befestigt sind.

Der Erfindung liegen dabei die folgenden Erkenntnisse zugrunde:

Der durch die Elektrode fliessende Gleichstrom erzeugt um die Elektrode herum ein Magnetfeld. Im Idealfall der unendlich langen Elektrode und bei Abwesenheit von magnetischen Bauteilen gilt

$$B = \mu_0 \cdot I/2\pi r$$

worin B = das Magnetfeld in Tesla bedeutet, I den Strom durch die Elektrode in Ampere, r den Abstand von der Elektrodenlängsachse in Metern und $\mu_0$ eine Konstante ($4\pi \cdot 10^{-7}$) ist. In der Praxis hat die Elektrode eine endliche Länge, was zu einer Verminderung des Magnetfeldes führt. Magnetische Bauteile im Unfeld der Elektrode, also z.B. Gefässwände, führen zu einer nicht einfach zu berechnenden Umverteilung des Magnetfeldes. Insbesondere wirkt sich hier der Einfluss der unter dem Ofengefäss verlegten Hochstromleitungen.

Ersetzt man nun ein oder mehrere (normal-)magnetische Wandsegmente durch solche aus nichtmagnetischem Material, so entsteht eine Konzentration der magnetomotorischen Kräfte im Bereich dieses Segments. Die dadurch entstehende Umverteilung des Magnetfeldes der stromdurchflossenen Elektrode kann durch ein zusätzliches Magnetfeld (Fensterfeld), repräsentiert werden. Im Bereich der Elektrode schneiden diese Feldlinien des "Fensterfeldes" den Lichtbogen. Dabei entsteht eine Kraft auf den Lichtbogen, die weg vom nichtmagnetischen Wandsegment gerichtet ist. Auf diese Weise lässt sich also der Einfluss der unter oder neben dem Ofengefäss verlaufenden Hochstromleitungen, die von der Stromversorgungseinrichtung zu der Bodenelektrode führen, weitgehend kompensieren.

Weil nun bereits der Einbau eines einzigen Wandsegements aus nichtmagnetischem Material eine Ueberkompensation der Ablenkung bewirken kann, sieht eine Weiterbildung der Erfindung vor, den kompensierenden Einfluss dieses Fensterfeldes dadurch zu schwächen, dass das nichtmagnetische Wandsegment höchstens teilweise von aussen mittels einer Trimmplatte aus magnetischem Material abgedeckt werden kann. Diese Trimmplatte kann direkt und ohne nennenswerten Abstand auf dem nichtmagnetischen Wandsegment angeordnet sein, wobei es das oder die be-nachbarte(n) "normale(n)" Wandsegment(e) überlappen kann. Es kann aber auch vom nichtmagnetischen Wandsegment beabstandet angebracht sein, z.B. auch ausserhalb der Tragkonstruktion der Wandsegmente. Diese Trimmplatte kann in einfach installierbare oder ausbaubare Sektionen aufgeteilt sein. Eine besonders vorteilhafte Variante sieht vor, die Trimmplatte zweiteilig auszubilden, die gegeneinander verschiebbar sind, so dass sich die Plattenhälften mehr oder weniger annähern, oder dass die beiden Plattenhälften teilweise über die angrenzenden "normalen" Wandsegmente geschoben werden. Auf diese Weise lässt sich die wirksame Trimmplattenfläche einfach variieren. Eine andere Variationsmöglichkeit besteht darin, den Abstand der Trimmplatte(n) vom nichtmagnetischen Wandsegment zu verändern. Wird die Trimmplatte nach aussen, d.h. weiter entfernt vom Ofengefäss verschoben, wird die Kompensation der Ablenkung stärker. Ein Verschieben der Trimmplatte(n) nach innen bewirkt eine Abschwächung der Kompensation. Wird das nichtmagnetische Wandsegment vollständig und ohne Abstand mit einer Trimmplatte abgedeckt, reduziert sich die kompensierende Kraft auf Null.

Weil sich derartige Manipulationen ohne Stilllegung des Ofens durchführen lassen, ist es nun erstmals möglich, die vom Bedienungspersonal gemachten Beobachtungen des Ofenbetriebes bezüglich Lichtbogenablenkung und Verschleiss in Gegenmassnahmen zum Trimmen der Lichtbogenablenkung umzusetzen, bis die erwünschte Kompensation der Lichtbogenablenkung erreicht worden ist. Bei mehrteiligen Trimmplatten kann diese Manipulation sogar in einfacher Weise ferngesteuert erfolgen.

In der Praxis wird man dabei so weit gehen, dass man a priori und bewusst eine Ueberkompensation durch das nichtmagnetische Wansdegment in Kauf nimmt, um dann durch das besagte Trimmen eine optimale Feldverteilung erreichen zu können.

Ein weiterer genereller Vorteil der Erfindung ist es, dass sich jeder Ofen mit einem segmentierten Oberofen mit nichtmagnetischen Wandsegmenten und auch Trimmeinrichtungen nachrüsten lässt, weil letztere mit dem neu einzubauenden Wandsegment zu einer Baueinheit zusammengefasst werden können.

Ausführungsbeispiele der Erfindung sowie die damit erzielbaren weiteren Vorteile werden nachfolgend anhand der Zeichnung näher erläutert.

## KURZE BESCHREIBUNG DER ZEICHNUNG

In der Zeichnung sind neben Skizzen zur Erläuterung der Erfindung Ausführungsbeispiele der Erfindung schematisch dargestellt. Dabei zeigt

Fig.1     eine Gleichstrom-Lichtbogenofen-Anlage mit einem Ofengefässs, einer Schmelzelektrode, einer Stromversorgungseinrichtung und von dieser zur Schmelzelektrode und der Bodenelektrode führenden Hochstromleitungen;

Fig.2     ein erstes Ausführungsbeispiel der Erfindung in Form eines Längsschnittes durch die Gefässwand eines Gleichstrom-Lichtbogenofens mit einem nichtmagnetischen Wandsegement, das von aussen teilweise mit einer Trimmplatte abgedeckt ist;

Fig.3     einen Schnitt durch das Wandsegment gemäss Fig.2 längs deren Linie AA;

Fig.4     ein zweites Ausführungsbeispiel der Erfindung in Form eines Längsschnittes durch die Gefässwand eines Gleichstrom-Lichtbogenofens mit einem nichtmagnetischen Wandsegement, das von aussen teilweise mit einer Trimmplatte abgedeckt ist, wobei die Trimmplatte mittels Distanzbolzen befestigt ist;

Fig.5    einen Schnitt durch das Wandsegment gemäss Fig.4 längs deren Linie BB;

Fig.6    ein drittes Ausführungsbeispiel der Erfindung in Form eines Längsschnittes durch die Gefässwand eines Gleichstrom-Lichtbogenofens mit einem nichtmagnetischen Wandsegement, dem eine zweiteilige Trimmplatte mit gegeneinander verschiebbaren Trimmplattenhälften zugeordnet sind;

Fig.7    einen Schnitt durch das Wandsegment gemäss Fig.6 längs deren Linie CC;

## WEGE ZUR AUSFÜHRUNG DER ERFINDUNG

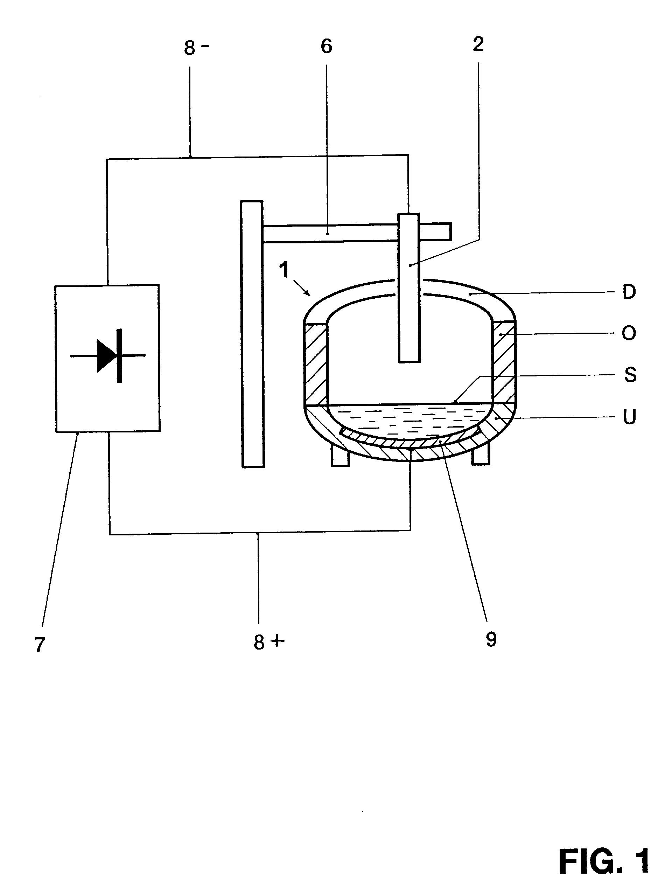

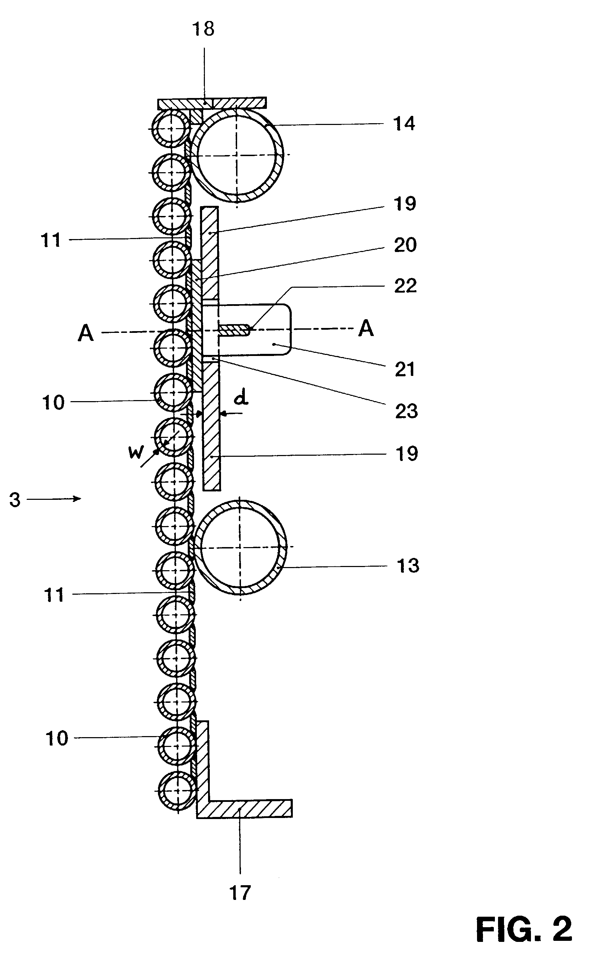

In der in Fig.1 stark vereinfacht dargestellten Gleichstrom-Lichtbogenofenanlage ist mit 1 das Ofengefäss, mit 2 die Schmelzelektrode, die an einem Elektrodentragarm 6 angeordnet ist, und mit 7 die neben dem Ofengefäss stehende Stromversorgungseinrichtung bezeichnet. Eine Hochstromleitung 8- führt zur Schmelzelektrode 2, eine andere 8+ zur Bodenelektrode 9. Das Ofengefäss selbst umfasst einen Unterofen U, einen Oberofen O und einen Ofendeckel D. Der Oberofen O oberhalb der Schlackenlinie S ist aus wassergekühlten Wandsegmenten aus Stahl aufgebaut, welche Wandsegmente hinsichtlich konstruktivem Aufbau, Befestigung und Anschlüssen für die Kühlflüssigkeit demjenigen den Wandsegmenten entsprechen, wie sie in in der eingangs genannten Firmenschrift, Seite 9, linkes oberes Bild oder in Fig.l und Fig.2 der DE-27 45 622 C2 beschrieben und dargestellt sind.

Erfindungsgemäss besteht nun die Gefässwand des Oberofens im Wandabschnitt, welcher im Normalfall der Stromversorgungseinrichtung 7 gegenüberliegt aus einem oder mehreren Wandsegmenten 3 aus nichtmagnetischem Stahl oder Kupfer.

Das Wandsegment umfasst in Horizontalrichtung verlaufende Rohre 10 aus nichtmagnetischem Stahl. Diese liegen im Beispielsfall nicht dicht an dicht, sondern sind (in Vertikalrichtung) voneinander beabstandet und mittels Metallstreifen 11 aus dem gleichem Material wie die Rohre 10 untereinander verbunden, z.B. verschweisst. Die verbleibenden Zwischenräume 12 zwischen den Rohren 10 werden vor oder auch nach dem Einbau des Wandsegments 3 mit Feuerfestmaterial ausgefüllt. Gleiches gilt auch für die Spalte zwischen benachbarten Wandsegmenten. Das Wandsegment 3 wird von einer skelettartigen Tragkonstruktion gehalten, von welcher im Beispielsfall die Rohre 13, 14, 15 und 16 für die Zu- und Abfuhr der Kühlflüssigkeit dargestellt sind. Teil der Tragkonstruktion sind ferner ein Tragwinkel 17, mit dem das Wandsegment auf dem (nicht dargestellten) Unterofen aufliegt, sowie eine Tragplatte 18 als Auflagefläche für den (gleichfalls nicht dargestellten) Ofendeckel. Insoweit entspricht der Aufbau des Wandsegments - abgesehen vom Material der Rohre 10 und Metallstreifen 11 dem Stand der Technik.

Wie eingangs ausführlich dargelegt wurde, lässt sich durch den Einbau eines Wandsegments aus nichtmagnetischem Material, vorzugsweise nichtmagnetischer Stahl oder Kupfer, die Ablenkung des Lichtbogens entscheidend beeinflussen. Je nach Segmentierung kann es dabei erforderlich sein, nicht nur ein Wandsegment in der beschriebenen Weise auszubilden; es können auch zwei oder mehrere benachbarte Wandsegmente aus dem besagten Material bestehen. Vorzugsweise wird man so vorgehen, dass man eine Ueberkompensation der Lichtbogenablenkung von vornherein vorsieht, um dann aufgrund von Betriebserfahrungen eine Feinabstimmung durchführen zu können.

Die Feinabstimmung erfolgt nun erfindungsgemäss durch Anbringen von einer oder mehreren Trimmplatten 19 bzw. 20a und 20b von aussen her an dem bzw. den nichtmagnetischen Wandsegmenten 3.

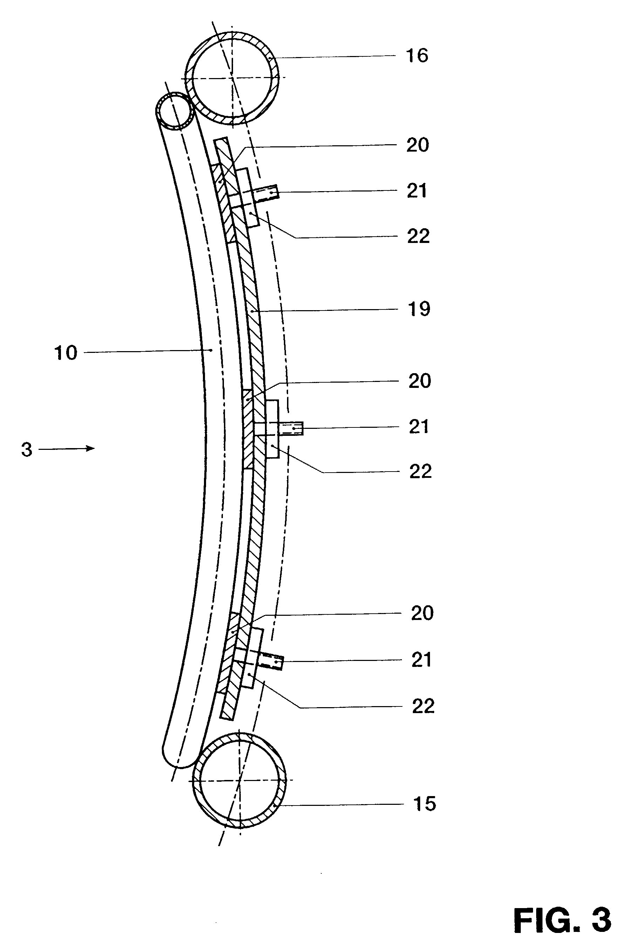

Bei einer ersten Ausführungsform, wie sie in Fig.2 und Fig.3 dargestellt ist, wird zur Verminderung der Wirkung des Wandsegments 3 aus nichtmagnetischem Material eine Trimmplatte 19 unmittelbar auf dessen Aussenseite lösbar befestigt. Zu diesem Zweck sind auf den Rohren 10 bzw. Metallstreifen 11 Zwischenplatten 20 aus nichtmagnetischen Material angebracht, die mit nach aussen gerichteten vertikal verlaufenden Laschen 21 versehen ist. Diese weisen eine Oeffnung auf, durch welche Keile 22 gesteckt sind. Die Trimmplatte 19 weist Durchbrüche 23 auf, so dass sie über die Laschen 21 geschoben und mittels der Keile 22 verkeilt werden kann. Die Wandstärke d der Trimmplatte ist so gewählt, dass sie mindestens doppelt so dick ist wie die Wandstärke w der Rohre 10.

In den Figuren 2 und 3 ist nur eine Trimmplatte 19 für ein Wandsegment 3 vorgesehen, das im Beispielsfall etwa die halbe Wandsegmentfläche bedeckt. Es versteht sich jedoch von selbst, dass eine weitere Trimmplatte in den Raum zwischen das Rohr 13 und den Tragwinkel 17 eingebaut und in gleicher Weise dort befestigt werden kann. Auch kann die Trimmplatte 19 in Umfangsrichtung unterteilt und die Teile separat befestigt sein, um eine optimale Beeinflussung des Lichtbogens aufgrund von Betriebserfahrungen zu ermöglichen.

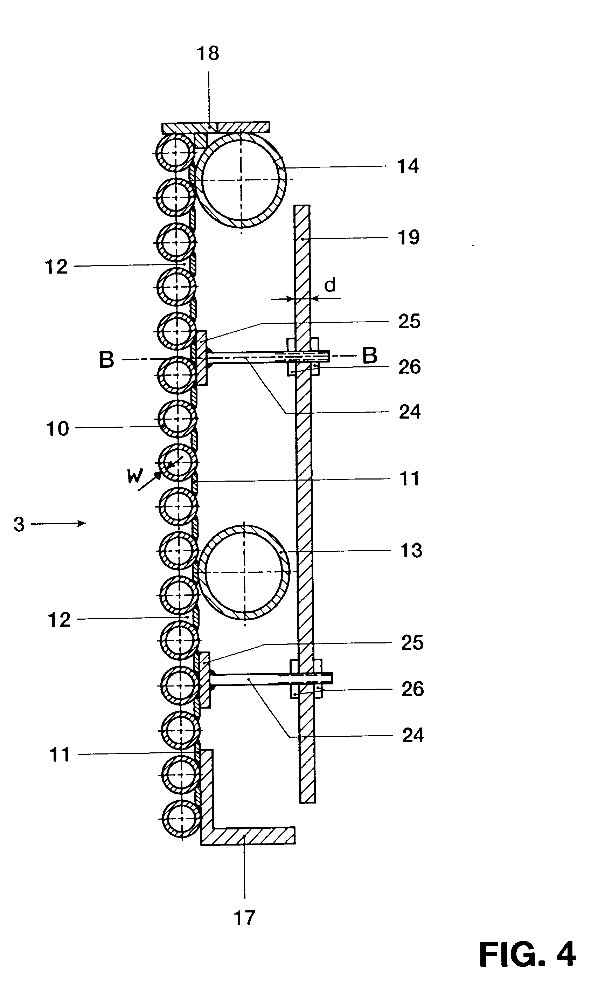

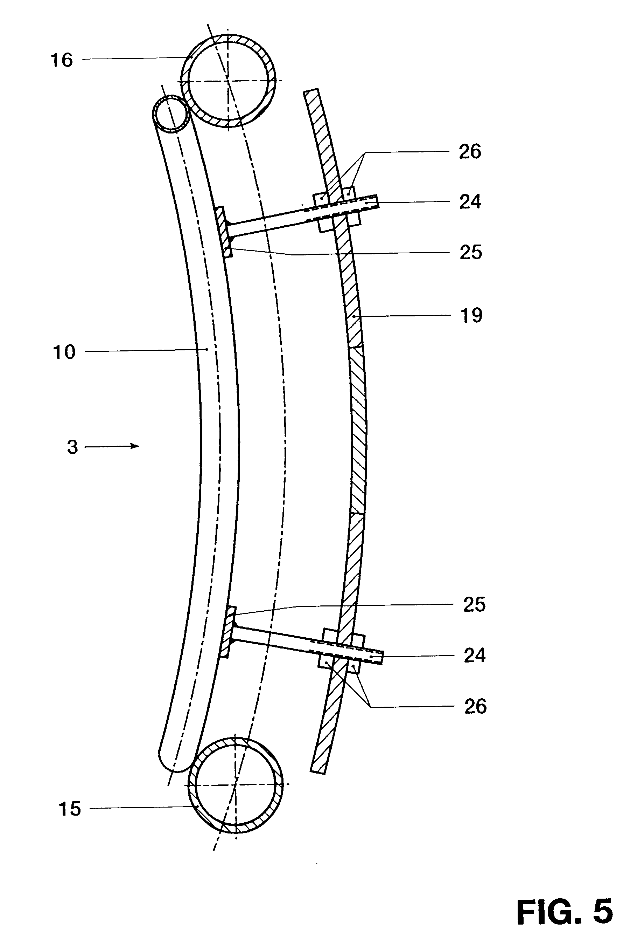

Anstelle einer oder mehrerer Trimmplatten 19, die praktisch auf der Aussenwand des Wandsegments aufliegen, kann auch eine einzige, praktisch die gesamte Aussenfläche des Wandsegments abdeckende Trimmplatte 19 eingesetzt werden. Diese Möglichkeit ist in den Figuren 4 und 5 beispielsweise veranschaulicht.

Dort ist die Trimmplatte 19 mittels Gewindestehbolzen 24 am nichtmagnetischen Wandsegment 3 befestigt. Die Wandstärke d der Trimmplatte ist wiederum so gewählt, dass sie mindestens doppelt so dick ist wie die Wandstärke w der Rohre 10. Die Stehbolzen 24 sind an Bolzenplatten 25 befestigt, die ihrerseits auf die Aussenwand des Wandsegments 3 geschweisst sind.

Nachdem der Abstand der Trimmplatte 19 vom Wandsegment 3 (Rohre 10) massgeblich die Trimmwirkung bestimmt und deshalb der Abstand einstellbar sein sollte, erreicht man diese Abstandsvariation einfach durch Verschieben der Trimmplatte 19 auf den Gewindestehbolzen 24 nach Lösen der Befestigungsmuttern 26 und anschliessendem Fixieren. Anstelle von Stehbolzen und Muttern ist auch eine Abstandsvariation über teleskopartig ineinandergreifenden Bolzen und Rohre, die an der Trimmplatte 19 befestigt sind, möglich (nicht in den Figuren 4 und 5 dargestellt). Auch bei dieser Ausführung ist es möglich, die Trimmplatte 19 zu unterteilen und die Teile getrennt voneinander zu befestigen bzw. verschieben zu können.

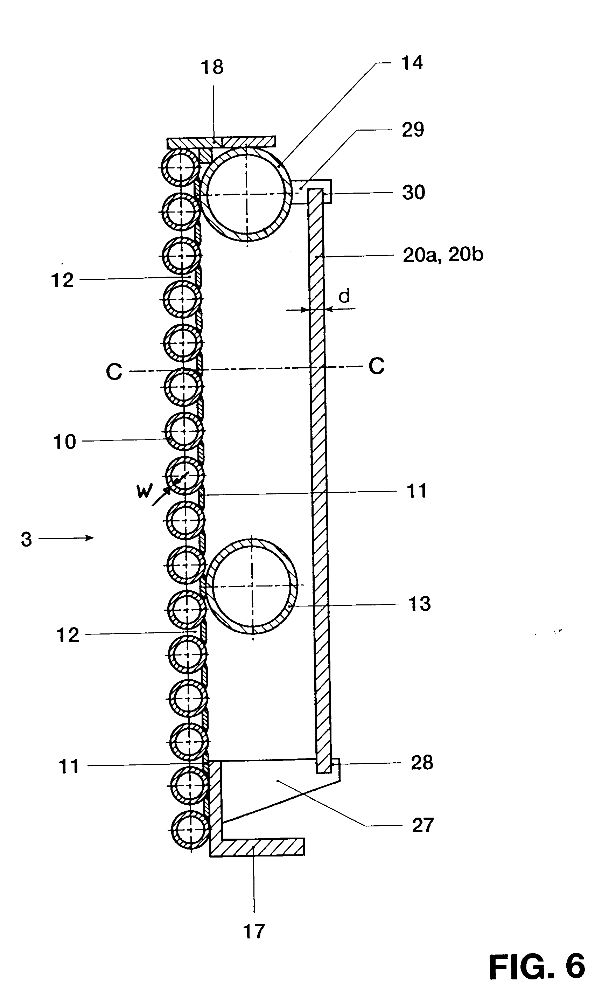

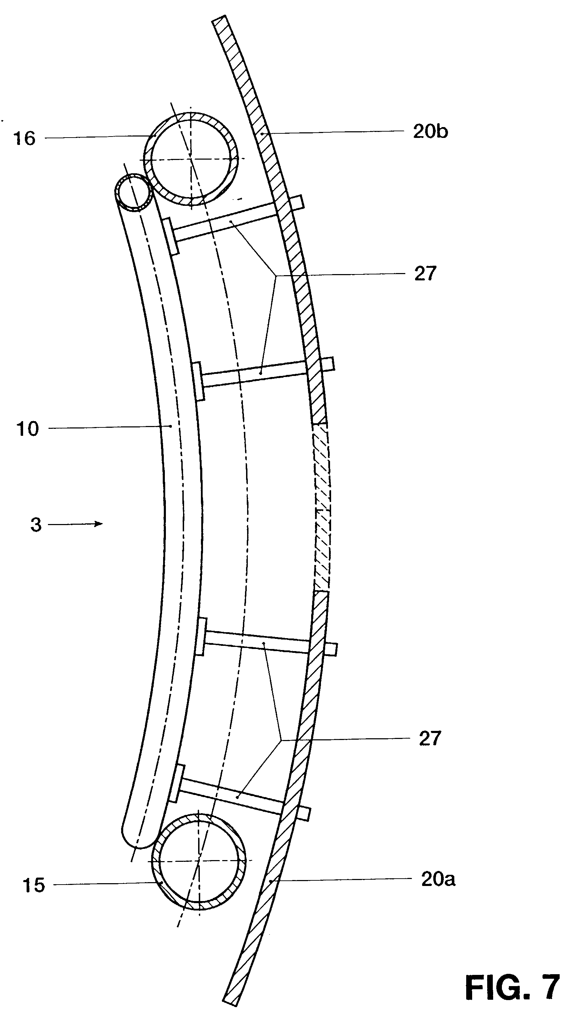

Bei einer dritten Ausführungsform der Erfindung, wie sie in den Figuren 6 und 7 dargestellt ist, ist die Trimmplatte in zwei etwa gleichgrosse Teile 20a und 20b aus (normalem) magnetischen Material unterteilt. Wie in den anderen Ausführungsbeispielen ist Wandstärke d der Trimmplattenhälften 20a, 20b so gewählt, dass sie mindestens doppelt so dick ist wie die Wandstärke w der Rohre 10 ist. Die Trimmplatten liegen am unteren Ende auf Konsolen 27 auf, die mit einer Nut 28 versehen sind. Am oberen Ende sind sie in Halterungen 29 gehalten, die am Rohr 14 der Tragkonstruktion befestigt und die ebenfalls mit Nuten oder Schlitzen 30 versehen sind. Auf diese Weise sind die beiden Trimmplattenhälften 20a und 20b Umfangsrichtung relativ zueinander und relativ zum Wandsegment 3 verschiebbar. Im zusammengeschobenen Zustand (in Fig.7 strichliert eingezeichnet) überdecken die beiden Trimmplattenhälften 20a und 20b das nichtmagnetische Wandsegment 3 vollständig.

Das Trimmen erfolgt durch Verschieben der einen oder der beiden Plattenhälften in Umfangsrichtung. Dabei schiebt sich das äussere Plattenende bzw. beide äusseren Plattenenden über die "normalen" Wandsegmente. die sich an das nichtmagnetische Wandsegment 3 anschliessen, wo sie keine Wirkung in magnetischer Hinsicht mehr entfalten können. Diese Variante eignet sich besonders für ein ferngesteuertes Trimmen, z.B. durch elektromotorisches, pneumatisches oder hydraulisches Verschieben der Trimmplattenhälften, von einer Schaltwarte aus.

Auch bei der Ausführungsform nach Fig.6 und 7 sind Abwandlungen möglich, ohne den durch die Erfindung gesteckten Rahmen zu verlassen. So kann beispielsweise auch eine ungeteilte Trimmplatte vorgesehen sein, die von Hand oder fernbetätigt aus dem Bereich des nichtmagnetischen Wandsegments mehr oder weniger herausbewegt werden kann. Je nach den konstruktiven Gegebenheiten der Tragkonstruktion kann es auch erforderlich sein, die Trimmplatte oder die Trimmplattenhälften zu unterteilen. Grundsätzlich ist hier wie auch bei den anderen Varianten anzustreben, dass der Abstand der Trimmplatte vom nichtmagnetischen Wandsegment und ihre Fläche und auch der Verfahrweg in Umfangsrichtung so bemessen sind, dass ein optimales Trimmen der Ablenkung des Lichtbogens möglich ist.

Neben den geschilderten Befestigungs- und Verfahrmöglichkeiten für die Trimmplatte bzw. Trimmplattenteile sind eine Reihe weiterer Möglichkeiten denk- und realisierbar. So könnten bei der Variante gemäss Fig.6 und 7 auch das Trimmen dadurch erfolgen, dass die beiden Trimmplattenhälften 20a und 20b nicht auseinandergezogen, sondern im Bereich des nichtmagnetischen Wandsegments 3 übereinander geschoben werden.

Die Erfindung beschränkt sich nicht auf Wandsegmente, die aus Rohrsschlangen aufgebaut sind. Sie lässt sich selbstverständlich auch bei Ofengefässen realisieren, die anstelle von Kühlrohren kastenartige Paneele aufweisen. Bei solchen Anordnungen sind demgemäss die Kastenwände aus nichtmagnetischem Material zu fertigen.

Die Erfindung wurde vorstehend anhand eines Ofengefässes beschrieben, das oberhalb der Schlakkenklinie S aus einzelnen Wandsegmenten aufgebaut ist. Für derartige Ofengefässe ist die Erfindung besonders vorteilhaft einzusetzen, weil sie auch bei bestehenden Ofenanlagen nachträglich zu realisieren ist. Die Erfindung lässt sich aber auch bei herkömmlichen Gefässkonstruktionen mit einem Ofengefäss aus Stahl, das innen mit einer Auskleidung aus feuerfestem Material versehen ist. Es versteht sich dann nahezu von selbst, dass die Trimmeinrichtung entweder direkt am Gefässmantel oder an einer Hilfskonstruktion befestigt werden kann. Ansonsten entspricht eine derartige Konstruktion derjenigen, wie sie für Segmentierte Gefässe beschrieben und dargestellt worden ist.

BEZEICHNUNGSLISTE

| 1 | Ofengefäss |
|---|---|
| 2 | Schmelzelektrode |
| 3 | nichtmagnetisches Wandsegment |
| 6 | Elektrodentragarm |
| 7 | Stromversorgungseinrichtung |
| 8+,8- | Hochstromleitungen |
| 9 | Bodenelektrode |
| 10 | Rohre aus nichtmagnetischem Stahl oder Kupfer |
| 11, | Metallstreifen |
| 12 | Zwischenräume zwischen 10 |
| 13,14,15,16 | Rohre zur Zu- und Abfuhr der Kühlflüssigkeit |
| 17 | Tragwinkel |
| 18 | Tragplatte |
| 19 | einteilige Trimmplatte aus magnetischem Stahl |
| 20 | Zwischenplatten |

| 21 | Laschen |
| 22 | Keile |
| 23 | Durchbruch in 19 |
| 24 | Stehbolzen |
| 25 | Bolzenplatte |
| 26 | Befestigungsmuttern |
| 27 | Konsolen |
| 28 | Nuten in 27 |
| 29 | Halterungen |
| 30 | Schlitze in 29 |

| O | Oberofen |
| S | Schlackenllinie |
| U | Unterofen |

| d | Dicke von 19 bzw. 20a und 20b |
| w | Wandstärke von 10 |

## Patentansprüche

1. Ofengefäss für einen Gleichstrom-Lichtbogenofen mit einer wärmebeständigen Wandung und einem äusseren Gefässmantel aus Stahl, einer Bodenelektrode (9) und einer Schmelzelektrode (2), die von einer seitlich ausserhalb des Gefässes (1) befindlichen Stromversorgungseinrichtung (7) über Hochstromleitungen (8+,8-) gespeist sind, dadurch gekennzeichnet, dass mindestens ein Wandabschnitt (3) des Gefässmantels aus unmagnetischem Material, vorzugsweise unmagnetischem Stahl oder Kupfer, besteht, der vorzugsweise auf der der Stromversorgungseinrichtung (7) gegenüberliegenden Seite des Ofengefässes (5) angeordnet ist.

2. Ofengefäss nach Anspruch 1, dadurch gekennzeichnet, dass bei einem Ofengefäss, dessen wärmebeständige Wandung im oberhalb der Schlakkenlinie liegenden Bereich aus einer Mehrzahl wassergekühlter Wandsegmente aus Stahl besteht, die an einer Tragkonstruktion befestigt sind, mindestens eines der Segmente aus unmagnetischem Material, vorzugsweise unmagnetischem Stahl oder Kupfer, besteht, das vorzugsweise auf der der Stromversorgungseinrichtung (7) gegenüberliegenden Seite des Ofengefässes (5) angeordnet ist.

3. Ofengefäss nach Anspruch 1 oder 2, dadurch gekennzeichnet, dass dem nichtmagnetischen Wandabschnitt bzw. Wandsegment (3) eine Trimmeinrichtung (19;20a,20b) zugeordnet ist zur Kompensation der magnetischen Wirkung des besagten nichtmagnetischen Wandabschnitts bzw. Wandsegments(3) auf den Lichtbogen.

4. Ofengefäss nach Anspruch 3, dadurch gekennzeichnet, dass3die Trimmeinrichtung eine oder mehrere Trimmplatten (19;20a,20b) aus magnetischem Stahl umfasst, die aussen am nichtmagnetischen Wandabschnitt bzw. Wandsegment (3) angeordnet ist bzw. sind.

5. Ofengefäss nach Anspruch Anspruch 4, dadurch gekennzeichnet, dass die Trimmplatte(n) an der Aussenwand des nichtmagnetischen Wandabschnitts bzw. Wandsegments (3) lösbar befestigt ist bzw. sind.

6. Ofengefäss nach Anspruch 5, dadurch gekennzeichnet, dass die Trimmplatte(n) mittels Keilen (22) befestigt ist bzw. sind.

7. Ofengefäss nach Anspruch 4, dadurch gekennzeichnet, dass die Trimmeinrichtung (19;20a,20b) distanziert von der Aussenwand des nichtmagnetischen Wandabschnitts bzw. Wandsegments (3) angeordnet ist.

8. Ofengefäss nach Anspruch 7, dadurch gekennzeichnet, dass die Trimmeinrichtung eine ein- oder mehrteilige Trimmplatte (19) umfasst, die mittels Stehbolzen (24) an dem nichtmagnetischen Wandabschnitt bzw. Wandsegment (3) lösbar befestigt ist bzw. sind und hinsichtlich ihres Abstandes zum nichtmagnetischen Wandabschnitt bzw. Wandsegment (3) einstellbar ist bzw. sind.

9. Ofengefäss nach Anspruch 7, dadurch gekennzeichnet, dass die Trimmeinrichtung (20a,20b) in Gefässumfangsrichtung als Ganzes verschiebbar an der Aussenseite des nichtmagnetischen Wandabschnitts bzw. Wandelements (3) und von diesem beabstandet angeordnet ist.

10. Ofengefäss nach Anspruch 9, dadurch gekennzeichnet, dass die Trimmeinrichtung aus zwei Trimmplattenhälften (20a,20b) besteht, die an Haltvorrichtungen (27,29) verschiebbar geführt sind, und relativ zueinander und/oder relativ zum nichtmagnetischen Wandabschnitt Wandsegmnet (3) bewegbar sind.

11. Ofengefäss nach einem der Ansprüche 1 bis 10, dadurch gekennzeichnet, dass die Dicke (d) der Trimmplatte(n) (19;20a,20b) mindestens doppelt so gross ist wie die Wandstärke (w) der Wandsegmente (3).

FIG. 1

**FIG. 2**

FIG. 3

**FIG. 4**

16

26

24

25

19

10

3 →

25

24

26

15

**FIG. 5**

**FIG. 6**

**FIG. 7**

| | Europäisches Patentamt | EUROPÄISCHER RECHERCHENBERICHT | | Nummer der Anmeldung EP 95 81 0779 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | FR-A-2 298 249 (ALLMANNA SVENSKA ELEKTRISKA AB) * Seite 3, Zeile 14 - Zeile 38; Ansprüche 1,6-9; Abbildung 3 * --- | 1,3 | C21C5/52 F27B3/08 H05B7/11 F27B3/24 |
| X | GB-A-2 046 560 (ASEA AB) * Seite 1, Zeile 102 - Zeile 120; Ansprüche; Abbildungen 1,2 * --- | 1 | |
| A | EP-A-0 258 101 (CLECIM SA) --- | | |
| A | EP-A-0 600 362 (DEUTSCHE VOEST-ALPINE) --- | | |
| A | GB-A-2 094 119 (ASEA AB) --- | | |
| A,P | DE-C-43 38 555 (MANNESMANNNN AG) --- | | |
| A | EP-A-0 518 070 (ASEA BROWN BOVERI AG) --- | | |
| A | FR-A-2 602 318 (CLECIM SA) --- | | RECHERCHIERTE SACHGEBIETE (Int.Cl.6) |
| A | US-A-5 138 629 (TOSHIMICHI MAKI) --- | | C21C F27B H05B F27D |
| A | DE-A-40 35 233 (NKK CORP) --- | | |
| A | FR-A-2 345 680 (VSESOJUZNY NAUCHNO...) ----- | | |

Der vorliegende Recherchenbericht wurde für alle Patentansprüche erstellt

| Recherchenort | Abschlußdatum der Recherche | Prüfer |
|---|---|---|
| DEN HAAG | 24.April 1996 | Coulomb, J |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

...........................................................................
& : Mitglied der gleichen Patentfamilie, übereinstimmendes Dokument

EPO FORM 1503 03.82 (P04C03)